# EUROPEAN PATENT APPLICATION

(11) **EP 4 843 877 A1**
(43) Date of publication of application: **25.11.2026**
(21) Application number: 26179508.2
(22) Date of filing: 19.05.2026
(51) Int. Cl.: B62K 19/34, B62J 6/06, B62J 23/00, B62J 45/00, B62K 19/40, B62M 6/80, H02K 7/18

(54) **AN INSTALLATION STRUCTURE FOR A SELF-GENERATING GENERATOR OF AN ELECTRIC-ASSIST BICYCLE**

(30) Priority: 22.05.2025 CN 202521023810 U
(71) Applicant: Suzhou Jinqiutiao Technology Co., Ltd., Kunshan, Jiangsu (CN)
(72) Inventor: CHU, SHIH-CHIEH, New Taipei City (TW); LI, MAO-ZHEN, New Taipei City (TW)
(74) Representative: Tahtadjiev, Konstantin

(57) **Abstract**

The present application discloses an installation structure for a self-generating generator of an electric-assist bicycle. A generator module (2) is installed inside a bottom bracket shell (10) of a frame (1), with a fixing plate (3) and cover plates (4, 5) arranged at both ends of the bottom bracket shell. Compared with the prior art, the structure provides convenient maintenance and replacement, a compact design, and efficient use of the internal space of the bottom bracket shell, thereby improving user experience and reducing inconvenience caused by equipment issues.

## Description

### BACKGROUND OF THE INVENTION

### 1. Field of the Invention

The utility model relates to a bicycle structure, specifically an installation structure for installing a generator within a bicycle frame.

### 2. Description of the Prior Art

With the continuous expansion of bicycle functions, many bicycles have begun to be equipped with power generation devices to provide electrical energy for lights, electronic display devices, or other electronic components. Alternatively, for electric-assist bicycles, it is necessary for the onboard generator to provide power while simultaneously charging the battery via the generator when the battery is depleted. Traditional power generation devices are typically installed on the wheel or other external components. While this installation method achieves the power generation function, it also has obvious drawbacks.

Firstly, the installation process for traditional generators is relatively complex. Since the power generation device needs to be matched with other bicycle components such as the wheel or frame, its installation often requires professional tools and a high level of technical skill, making it difficult for ordinary users to complete on their own.

Secondly, the maintenance and replacement of traditional generators are also relatively inconvenient. Once a generator malfunctions, multiple associated components need to be disassembled. The repair process is cumbersome and time-consuming, not only increasing maintenance costs but also potentially affecting the user's normal experience.

Further, traditional generators installed on the wheel or the external frame are susceptible to external environmental influences, such as intrusion of mud and sand or collision damage, further reducing their reliability and service life.

Therefore, how to design a generator installation structure that is easy to install, convenient to maintain, and offers good protection has become an urgent problem to be solved in the current technical field. The installation structure for a self-generating generator of an electric-assist bicycle proposed in this case effectively improves the problems existing in traditional generators.

### SUMMARY OF THE INVENTION

To solve this problem, the present utility model proposes an installation structure for a self-generating generator of an electric-assist bicycle. It is characterized by comprising a frame, a generator module, a fixing plate, a first cover plate, and a second cover plate. The frame includes a bottom bracket shell, and the generator module is installed inside the bottom bracket shell. The fixing plate is arranged at one end of the generator module. A first cover plate is provided on the outer side of the fixing plate, the first cover plate is arranged at one end of the bottom bracket shell, and the second cover plate is arranged at the other end of the bottom bracket shell.

Further, opening portions at both ends of the bottom bracket shell are respectively provided with first internal threads, the first cover plate and the second cover plate are respectively provided with first external threads, and the first cover plate and the second cover plate are respectively fixed at the two ends of the bottom bracket shell via the engagement of the first internal threads and the first external threads. Further, one end of the generator module is provided with second internal threads, the fixing plate is provided with second external threads, and the fixing plate is installed at one end of the generator module via the engagement of the second internal threads and the second external threads.

Further, the fixing plate is provided with a fixing plate locking hole, the first cover plate is provided with a cover plate locking hole, and a fastener secures the fixing plate and the first cover plate together by passing through the cover plate locking hole and the fixing plate locking hole.

Further, an inner edge of the first cover plate is provided with an alignment protrusion, an outer edge of the fixing plate is provided with an alignment groove, and the alignment protrusion matches with the alignment groove.

Further, centers of the fixing plate, the first cover plate, and the second cover plate are each provided with a through hole, and a rotating shaft of the generator module passes through the through hole to connect with a crank.

Compared to the prior art, the advantages of the present utility model are:
(1) Convenient maintenance and replacement. The generator module is fixed at both ends of the bottom bracket shell by the cover plates. Removing the cover plates allows for quick inspection or replacement of the generator without disassembling other complex components, significantly improving maintenance and replacement efficiency, and reducing repair time and cost.
(2) Compact structure, saving space. The generator module and the frame's bottom bracket shell are integrated in design, making full use of the internal space of the bottom bracket shell without occupying additional external space on the frame or wheels, making the overall bicycle structure more compact and its appearance cleaner.
(3) Enhancing the user experience, this technical solution significantly improves the user experience by optimizing the installation and maintenance methods and enhancing the durability of the equipment, thereby reducing inconvenience and trouble caused by equipment issues.

Through structural optimization, this technical solution overcomes the drawbacks of traditional generators, such as complex installation, inconvenient maintenance, and insufficient reliability. It simplifies operation while improving performance, meeting the high demands of modern bicycles for functionality and convenience.

### BRIEF DESCRIPTION OF THE DRAWINGS

FIG. 1 is an exploded view of the frame and generator fixing structure of the utility model.
FIG. 2 is a structural view of the frame of the utility model.
FIG. 3 is an exploded view of the generator module and fixing structure of the utility model.
FIG. 4 is another exploded view of the generator module and fixing structure of the utility model from a different angle.
FIG. 5 is a schematic diagram of the crank structure for installing the frame and generator module of the utility model.

### DETAILED DESCRIPTION OF THE PREFERRED EMBODIMENTS

In the description of the present utility model, it should be understood that the orientation or positional relationships indicated by terms such as "center", "longitudinal", "transverse", "length", "width", "thickness", "upper", "lower", "front", "rear", "left", "right", "vertical", "horizontal", "top", "bottom", "inner", "outer", "clockwise", and "counterclockwise" are based on the orientation or positional relationships shown in the accompanying drawings. They are used only for convenience in describing the present utility model and simplifying the description, and do not indicate or imply that the referred device or element must have a specific orientation or be constructed and operated in a specific orientation. Therefore, they cannot be construed as limitations on the present utility model.

In the description of the present utility model, the meaning of "a plurality" is two or more, unless explicitly and specifically defined otherwise.

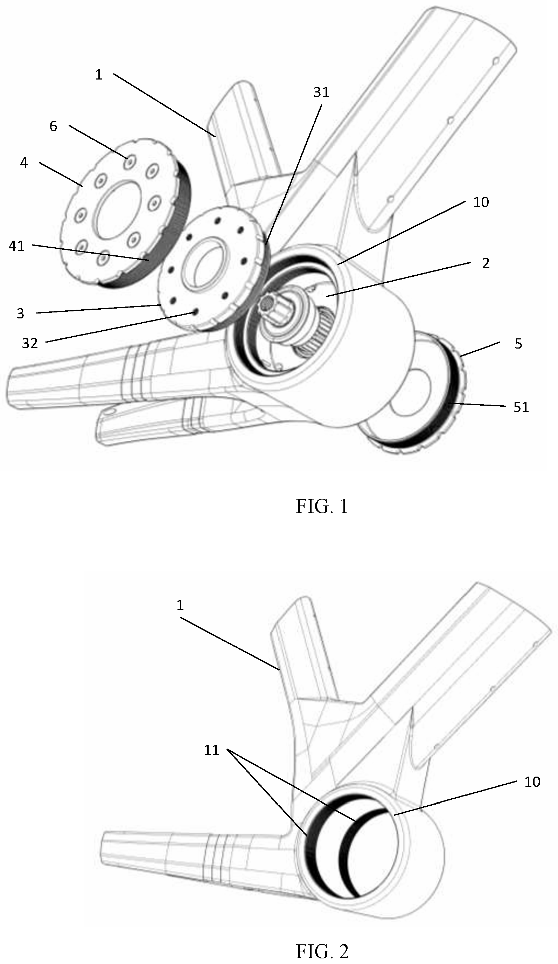

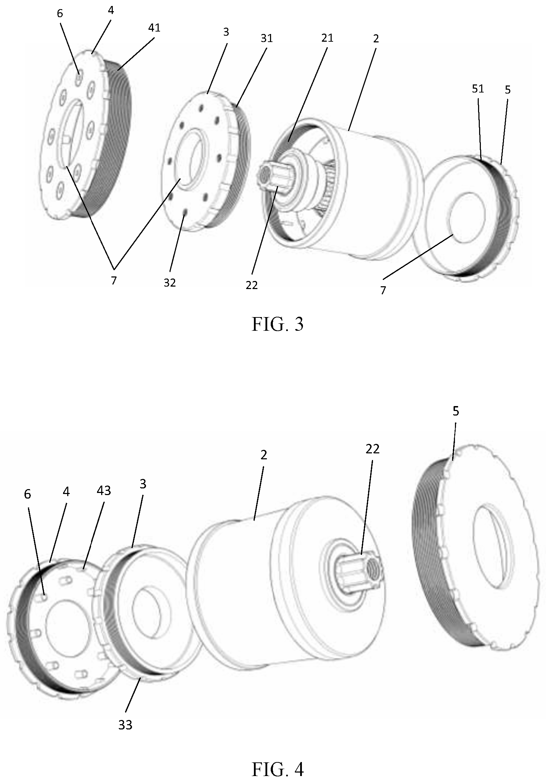

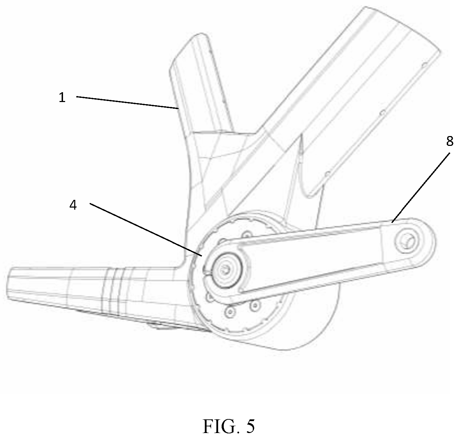

In the description of the present utility model, it should be noted that, unless otherwise explicitly specified and defined, terms such as "installed with", "be provided with", "fitted with/set with", and "connected with" should be interpreted broadly. For example, "connected with" can mean a fixed connection, a detachable connection, or an integral connection; it can be a mechanical connection or an electrical connection; it can be a direct connection, an indirect connection through an intermediary, or an internal communication between two components. For those of ordinary skill in the art, the specific meanings of the above-mentioned terms in the present utility model can be understood based on the specific circumstances. Please refer to FIG. 1-FIG. 5. The present utility model provides an installation structure for a self-generating power generator for an electric-assist bicycle, comprising a frame 1, a generator module 2, a fixing plate 3, a first cover plate 4, and a second cover plate 5. The frame 1 includes a bottom bracket shell 10. The generator module 2 is installed inside the bottom bracket shell 10. The fixing plate 3 is disposed at one end of the generator module 2. The first cover plate 4 is arranged on the outer side of the fixing plate 3, and is installed at one end of the bottom bracket shell 10. The second cover plate 5 is installed at the other end of the bottom bracket shell 10.

To achieve a secure installation structure, opening portions at both ends of the bottom bracket shell 10 are provided with first internal threads 11 (see FIG. 2), and the first cover plate 4 and the second cover plate 5 are respectively provided with first external threads 41 and 51. Through the threaded engagement of the first internal thread 11 with the first external threads 41 and 51, the first cover plate 4 and the second cover plate 5 can be securely fixed to both ends of the bottom bracket shell 10, effectively preventing loosening and ensuring structural stability.

One end of the generator module 2 is provided with second internal thread 21, and the fixing plate 3 is provided with second external thread 31. Through the threaded engagement of the second internal thread 21 with the second external thread 31, the fixing plate 3 can be installed on one end of the generator module 2, forming a stable connection between the generator module 2 and the fixing plate 3, which facilitates subsequent overall fixation.

The fixing plate 3 is provided with fixing plate locking hole 32, and the first cover plate 4 is provided with cover plate locking hole 42. The fastener 6 secures and fixes the fixing plate 3 to the first cover plate 4 through the cover plate locking hole 42 and the fixing plate locking hole 32. This locking method further enhances the connection strength between the fixing plate 3 and the first cover plate 4, preventing loosening or displacement caused by vibration during use.

To achieve precise positioning, the inner edge of the first cover plate 4 is provided with alignment protrusion 43, and the outer edge of the fixing plate is provided with alignment groove 33. The engagement of the alignment protrusion 43 with the alignment groove 33 allows for precise alignment between the fixing plate 3 and the first cover plate 4, simplifying the installation process and improving installation accuracy.

Further, the fixing plate 3, the first cover plate 4, and the second cover plate 5 all have central through-hole 7. The rotating shaft 22 of the generator module 2 passes through the through-hole 7 to connect with the crank 8. This design not only ensures the normal operation of the generator module but also enables efficient transfer of the generator's output energy to the crank, further enhancing overall performance. It should be noted that, similar to a typical bicycle, a chainring (not shown in the Figure) can be installed on the outer side of the second cover plate 5. A chain (not shown in the Figure) is installed on the chainring and is connected to the rear wheel for power transmission. The related power transmission structure is conventional in the field and will not be elaborated here. The connecting wires of the generator module 2 can be routed internally through the frame or exit through openings near the bottom bracket shell 10, and are further connected to devices requiring charging or power supply.

Through the aforementioned design, the installation structure for a self-generating generator for the electric-assist bicycle provided by the utility model can effectively solve the problems of complex installation and difficult maintenance in traditional technologies. It also offers advantages such as simple installation, stable structure, and precise positioning, significantly enhancing user experience and the service life of the generator.

The basic principles, main features, and advantages of the utility model have been shown and described above. It should be understood by those skilled in the art that the utility model is not limited by the aforementioned embodiments. The embodiments and descriptions in the specification are merely preferred examples of the utility model and are not intended to limit it. Without departing from the spirit and scope of the utility model, various changes and improvements may be made and fall within the scope of the utility model as claimed. The scope of protection claimed for the utility model is defined by the appended claims and their equivalents.

## Claims

1. An installation structure for a self-generating generator of an electric-assist bicycle is **characterized by** comprising: a frame, a generator module, a fixing plate, a first cover plate, and a second cover plate.
The frame includes a bottom bracket shell, and the generator module is installed inside the bottom bracket shell.
The fixing plate is arranged at one end of the generator module. A first cover plate is provided on the outer side of the fixing plate, the first cover plate is arranged at one end of the bottom bracket shell, and the second cover plate is arranged at the other end of the bottom bracket shell.

2. The installation structure for a self-generating generator of an electric-assist bicycle according to claim 1 has following features: opening portions at both ends of the bottom bracket shell are respectively provided with first internal threads, the first cover plate and the second cover plate are respectively provided with first external threads, and the first cover plate and the second cover plate are respectively fixed at the two ends of the bottom bracket shell via the engagement of the first internal threads and the first external threads.

3. The installation structure for a self-generating generator of an electric-assist bicycle according to claim 1 has following features: one end of the generator module is provided with second internal threads, the fixing plate is provided with second external threads, and the fixing plate is installed at one end of the generator module via the engagement of the second internal threads and the second external threads.

4. The installation structure for a self-generating generator of an electric-assist bicycle according to claim 1 has following features: the fixing plate is provided with a fixing plate locking hole, the first cover plate is provided with a cover plate locking hole, and a fastener secures the fixing plate and the first cover plate together by passing through the cover plate locking hole and the fixing plate locking hole.

5. The installation structure for a self-generating generator of an electric-assist bicycle according to claim 4 has following features: an inner edge of the first cover plate is provided with an alignment protrusion, an outer edge of the fixing plate is provided with an alignment groove, and the alignment protrusion matches with the alignment groove.

6. The installation structure for a self-generating generator of an electric-assist bicycle according to claim 1 has following features: centers of the fixing plate, the first cover plate, and the second cover plate are each provided with a through hole, and a rotating shaft of the generator module passes through the through hole to connect with a crank.
